# EUROPEAN PATENT APPLICATION

(11) **EP 4 383 595 A1**
(43) Date of publication of application: **12.06.2024**
(21) Application number: 22852553.1
(22) Date of filing: 03.03.2022
(51) Int. Cl.: H04H 20/02, H04N 21/235, H04N 21/2362

(54) **RETRANSMISSION DEVICE, RETRANSMISSION METHOD, RECEIVING DEVICE, AND RECEIVING METHOD**

(30) Priority: 06.08.2021 JP 2021129589
(71) Applicant: Sony Group Corporation, Tokyo 108-0075 (JP)
(72) Inventor: TAKAHASHI Kazuyuki, Tokyo 108-0075 (JP)
(74) Representative: 2SPL Patentanwälte PartG mbB
(86) International application number: PCT/JP2022/009032
(87) International publication number: WO 2023/013124

(57) **Abstract**

The present disclosure relates to a retransmission device, a retransmission method, a reception device, and a reception method that enable more appropriate processing of time information.

Provided is a retransmission device that includes: a reception unit that receives a broadcast signal of a first broadcasting system; a conversion unit that converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and a transmission unit that transmits a broadcast signal of the second broadcasting system. The present disclosure can be applied to, for example, a retransmission device that retransmits digital terrestrial television broadcasting.

## Description

### TECHNICAL FIELD

The present disclosure relates to a retransmission device, a retransmission method, a reception device, and a reception method, and more particularly, to a retransmission device, a retransmission method, a reception device, and a reception method that enable more appropriately processing time information.

### BACKGROUND ART

An operation of retransmitting digital terrestrial television broadcasting is performed. For retransmission of digital terrestrial television broadcasting, digital cable television broadcasting or the like is used (refer to, for example, Patent Document 1).

### CITATION LIST

### PATENT DOCUMENT

Patent Document 1: Japanese Patent Application Laid-Open No. 2010-220241

### SUMMARY OF THE INVENTION

### PROBLEMS TO BE SOLVED BY THE INVENTION

In digital terrestrial television broadcasting, it is possible to transmit time information by a physical layer, but in a case where retransmission by a transmodulation system is performed, the time information transmitted by this physical layer cannot be appropriately processed. Furthermore, there is also a request for processing the time information transmitted in the physical layer on a reception device side, and a proposal for appropriately processing the time information has been demanded.

The present disclosure has been made in view of such circumstances, and makes it possible to more appropriately process time information.

### SOLUTIONS TO PROBLEMS

A retransmission device according to one aspect of the present disclosure includes: a reception unit that receives a broadcast signal of a first broadcasting system; a conversion unit that converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and a transmission unit that transmits a broadcast signal of the second broadcasting system.

A retransmission method according to one aspect of the present disclosure is a retransmission method including: by a retransmission device, receiving a broadcast signal of a first broadcasting system; converting first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and transmitting a broadcast signal of the second broadcasting system.

In the retransmission device and the retransmission method according to one aspect of the present disclosure, a broadcast signal of a first broadcasting system is received, first time information transmitted in a physical layer defined by the first broadcasting system is converted into second time information in an NTP format stored in a packet to be transmitted in an upper layer, the upper layer being a layer higher than a physical layer defined by a second broadcasting system different from the first broadcasting system, and a broadcast signal of the second broadcasting system is transmitted.

A reception device according to one aspect of the present disclosure includes: a reception unit that receives and demodulates a broadcast signal of a first broadcasting system; and a processing unit that processes a packet obtained by demodulating the broadcast signal, in which the reception unit includes a conversion unit that converts first time information transmitted in a physical layer defined by the first broadcasting system into second time information in an NTP format stored in a packet transmitted in an upper layer, the upper layer being a layer higher than a physical layer defined by a second broadcasting system different from the first broadcasting system, and the processing unit processes a packet storing the second time information output from the reception unit.

A reception method according to one aspect of the present disclosure is a reception method of a reception device including: a reception unit that receives and demodulates a broadcast signal of a first broadcasting system; and a processing unit that processes a packet obtained by demodulating the broadcast signal, in which the reception unit converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system, and the processing unit processes a packet storing the second time information output from the reception unit.

In the reception device and the reception method according to one aspect of the present disclosure, the broadcast signal of the first broadcasting system is received and demodulated, and the packet obtained by demodulating the broadcast signal is processed. Furthermore, the first time information transmitted in the physical layer defined by the first broadcasting system is converted into second time information in an NTP format stored in a packet to be transmitted in an upper layer, the upper layer being a layer higher than the physical layer defined by the second broadcasting system different from the first broadcasting system, and the packet storing the second time information is processed.

Note that the retransmission device and the reception device according to one aspect of the present disclosure may be independent devices or may be internal blocks constituting one device.

### BRIEF DESCRIPTION OF DRAWINGS

Fig. 1 is a block diagram illustrating a configuration example of an embodiment of a transmission system to which the present disclosure is applied.
Fig. 2 is a block diagram illustrating a configuration example of a transmission device in Fig. 1.
Fig. 3 is a block diagram illustrating a configuration example of a retransmission device in Fig. 1.
Fig. 4 is a block diagram illustrating a configuration example of a reception device in Fig. 1.
Fig. 5 is a diagram illustrating an example of a protocol stack of digital terrestrial television broadcasting.
Fig. 6 is a diagram illustrating an example of a protocol stack at the time of retransmission by digital cable television broadcasting.
Fig. 7 is a diagram illustrating an example of arrangement of NTP time information.
Fig. 8 is a diagram illustrating an example of syntax of NTP time information.
Fig. 9 is a diagram illustrating an example of conversion from physical layer time information to NTP time information.
Fig. 10 is a diagram illustrating an example of a protocol stack in ATSC 3.0.
Fig. 11 is a flowchart illustrating a flow of processing of each device in the transmission system in Fig. 1.
Fig. 12 is a block diagram illustrating another configuration example of the embodiment of the transmission system to which the present disclosure is applied.
Fig. 13 is a block diagram illustrating a configuration example of a retransmission device in Fig. 12.
Fig. 14 is a block diagram illustrating still another configuration example of the embodiment of the transmission system to which the present disclosure is applied.
Fig. 15 is a block diagram illustrating a configuration example of a reception device in Fig. 14.
Fig. 16 is a flowchart illustrating a flow of processing of each device in the transmission system in Fig. 14.
Fig. 17 is a block diagram illustrating a configuration example of a computer.

### MODE FOR CARRYING OUT THE INVENTION

### <1. First Embodiment>

### (Configuration of Transmission System)

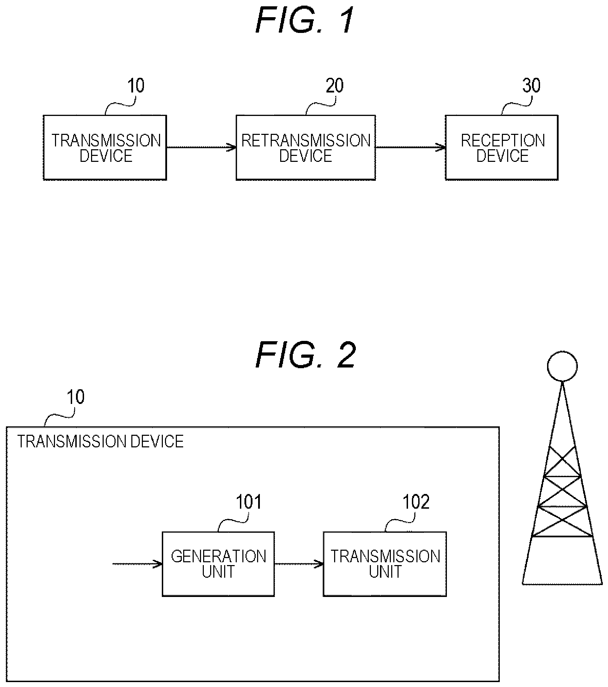

Fig. 1 is a block diagram illustrating a configuration example of an embodiment of a transmission system to which the present disclosure is applied.

In Fig. 1, the transmission system includes a transmission device 10, a retransmission device 20, and a reception device 30.

The transmission device 10 is a device that transmits content such as a broadcast program produced by a broadcast station of terrestrial broadcasting. The transmission device 10 generates a broadcast stream, performs necessary processing on the stream, and transmits the resulting broadcast signal of digital terrestrial television broadcasting from a transmission antenna installed in a transmission station.

The retransmission device 20 is a head end device installed in a cable television station or the like. The retransmission device 20 performs necessary processing on a broadcast signal of digital terrestrial television broadcasting received via the antenna, and transmits the resulting broadcast signal of digital cable television broadcasting to a cable television transmission network.

The reception device 30 is a fixed receiver such as a television receiver, a set top box (STB), a recorder, a game machine, or a network storage. The reception device 30 is connected to the cable television transmission network by a cable such as an optical fiber cable or a coaxial cable.

The reception device 30 receives the broadcast signal of digital cable television broadcasting transmitted from the retransmission device 20 via the cable television transmission network. The reception device 30 outputs video and audio of content such as a broadcast program by processing a broadcast stream obtained from the broadcast signal. As a result, the user can view content such as a broadcast program.

In the following description, the broadcast signal of digital terrestrial television broadcasting is also referred to as a terrestrial broadcast signal. Furthermore, the broadcast signal of digital cable television broadcasting is also referred to as a cable broadcast signal.

### (Configuration of Transmission Device)

Fig. 2 is a block diagram illustrating a configuration example of the transmission device 10 in Fig. 1.

In Fig. 2, the transmission device 10 includes a generation unit 101 and a transmission unit 102.

The generation unit 101 generates, on the basis of the data input thereto, a broadcast stream to be supplied to the transmission unit 102.

The broadcast stream includes a broadcast component constituting content such as a broadcast program and a CM produced by a broadcast station of terrestrial broadcasting, control information regarding the broadcast component, time information, and the like. The broadcast component includes components such as a video stream, an audio stream, and a subtitle stream.

The transmission unit 102 generates a physical layer frame conforming to the broadcasting system of digital terrestrial television broadcasting on the basis of the broadcast stream supplied from the generation unit 101. The transmission unit 102 performs necessary processing such as modulation processing on the physical layer frame to be transmitted as a terrestrial broadcast signal. The terrestrial broadcast signal is transmitted from a transmission antenna installed in a transmission station.

The physical layer frame includes control information such as transmission multiplexing control information. In the following description, the control information transmitted in the physical layer is also referred to as physical layer control information. Furthermore, control information transmitted in an upper layer (for example, a transport layer) that is a layer higher than the physical layer is also referred to as upper layer control information. For example, the control information regarding the broadcast component is the upper layer control information.

### (Configuration of Retransmission Device)

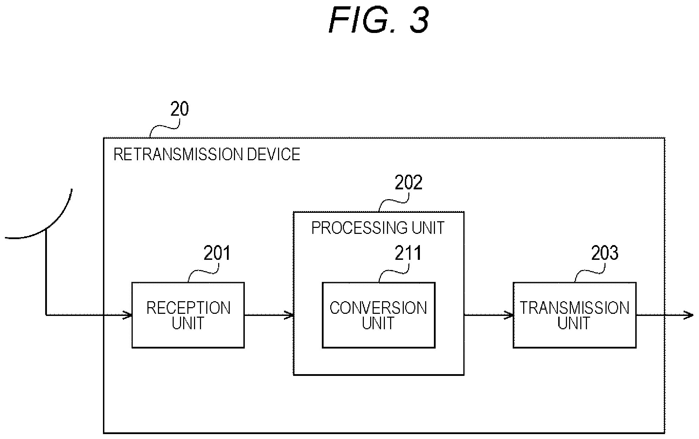

Fig. 3 is a block diagram illustrating a configuration example of a retransmission device 20 in Fig. 1.

In Fig. 3, the retransmission device 20 includes a reception unit 201, a processing unit 202, and a transmission unit 203.

The reception unit 201 receives the terrestrial broadcast signal transmitted from the transmission device 10 via the antenna, performs necessary processing to be supplied to the processing unit 202.

The processing unit 202 performs processing corresponding to the transmodulation system on the signal supplied from the reception unit 201, and supplies the resulting signal to the transmission unit 203. The transmodulation system is a system in which the retransmission device 20 of the cable television station changes the modulation scheme of the received broadcast signal and retransmits the broadcast signal.

The processing unit 202 includes a conversion unit 211. The conversion unit 211 converts the time information transmitted in the physical layer defined by the broadcasting system of digital terrestrial television broadcasting into time information in a network time protocol (NTP) format stored in a packet transmitted in the upper layer defined by the broadcasting system of digital cable television broadcasting.

The physical layer frame includes time information. The time information may be included in the physical layer control information, or may be transmitted separately from the physical layer control information. In the following description, the time information transmitted in the physical layer is also referred to as physical layer time information. Furthermore, the time information in the NTP format stored in a packet (for example, an IP/UDP packet) transmitted in an upper layer (for example, a transport layer) that is a layer higher than the physical layer is also referred to as NTP time information.

The transmission unit 203 transmits a cable broadcast signal on the basis of the signal supplied from the processing unit 202. The cable broadcast signal is transmitted via the cable television transmission network.

### (Configuration of Reception Device)

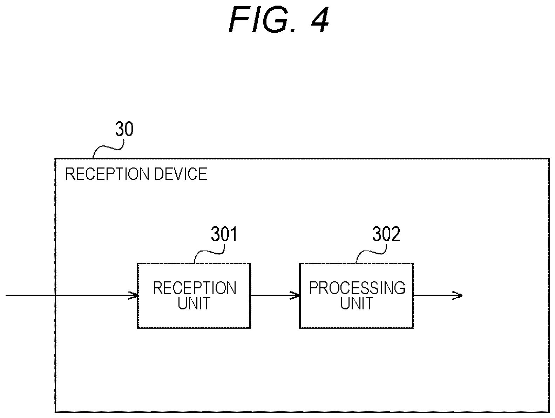

Fig. 4 is a block diagram illustrating a configuration example of the reception device 30 in Fig. 1.

In Fig. 4, the reception device 30 includes a reception unit 301 and a processing unit 302.

The reception unit 301 includes a tuner, a demodulation large scale integration (LSI), or the like. The reception unit 301 performs necessary processing such as demodulation processing on the cable broadcast signal received via the cable television transmission network, and supplies a packet storing data of the resulting broadcast stream to the processing unit 302.

The processing unit 302 includes a main system on chip (SoC) or the like. The processing unit 302 performs necessary processing such as decoding processing and reproduction processing on the packet supplied from the reception unit 301.

The broadcast stream includes a broadcast component and upper layer control information. For example, in the decoding processing and the reproduction processing, the data of the broadcast component is decoded and reproduced on the basis of the upper layer control information.

Data such as video and audio obtained by processing such as the decoding processing and the reproduction processing is output to a subsequent circuit. As a result, in the reception device 30, the video of content such as a broadcast program is displayed on a display, and the audio synchronized with the video is output from a speaker.

In the transmission system of Fig. 1 configured as described above, the broadcast stream generated by the transmission device 10 is retransmitted by the retransmission device 20, and is received and processed by the reception device 30 via the cable television transmission network, whereby content such as a broadcast program can be viewed.

Note that, in the configuration described above, the transmission device 10 includes the generation unit 101 and the transmission unit 102. However, the generation unit 101 and the transmission unit 102 may be provided in different devices. That is, the transmission system may be configured as a transmission system including a device including the generation unit 101 and a device including the transmission unit 102.

Furthermore, in the configuration described above, the retransmission device 20 includes the reception unit 201, the processing unit 202, and the transmission unit 203. However, the reception unit 201, the processing unit 202, and the transmission unit 203 may be provided in different devices. Moreover, in the configuration described above, the case where there is one reception device 30 is exemplified, but actually, a plurality of the reception devices 30 is provided, and each reception device 30 is connected to the cable television transmission network.

### (Details of Broadcasting System)

In Japan, integrated services digital broadcasting-terrestrial (ISDB-T) is adopted as a broadcasting system of digital terrestrial television broadcasting and a next-generation system of digital terrestrial television broadcasting is being studied. In the next-generation system digital terrestrial television broadcasting, control information is transmitted through a plurality of paths using transmission multiplexing configuration control (TMCC) or low latency channel (LLch) together with a broadcast stream.

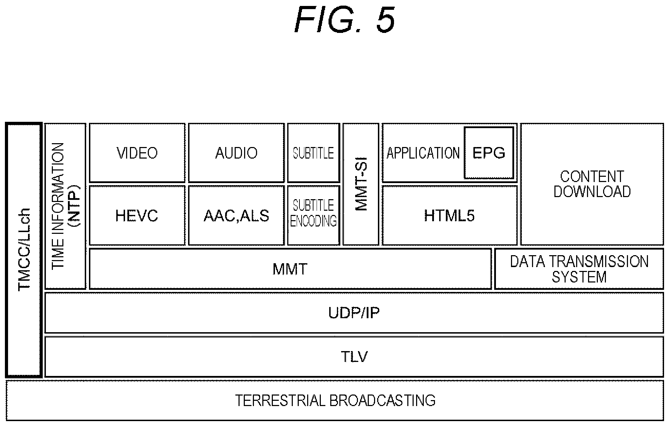

Fig. 5 is a diagram illustrating an example of a protocol stack of the next-generation system digital terrestrial television broadcasting. In the protocol stack in Fig. 5, the terrestrial broadcasting corresponding to the lowest layer corresponds to the physical layer, and the TMCC and the LLch are transmitted as the physical layer control information. The TMCC is transmission multiplexing control information. The LLch transmits additional information regarding broadcasting. Furthermore, physical layer time information is transmitted in the physical layer.

In the next-generation system digital terrestrial television broadcasting, an Internet protocol (IP) system is adopted, so that a type length value (TLV) packet for transmitting an IP/UDP packet through a broadcast transmission path is used. The IP/UDP packet is an IP packet including a user datagram protocol (UDP) packet. The TLV packet is a variable-length packet. In a case where the IP system is adopted, an MPEG media transport (MMT) scheme can be used as a media transport scheme (transport protocol).

The MMT scheme is a scheme for transmitting multimedia content using various networks such as broadcasting and communication. By using the MMT scheme, data such as video, audio, subtitles, control information, and applications is carried on an MMT protocol (MMTP) payload in a predetermined format, and is packetized into an MMTP packet to be stored in an IP/UDP packet. Then, the IP/UDP packet is stored in the TLV packet and encapsulated, and the resulting broadcast stream is transmitted as a terrestrial broadcast signal.

MMT-signaling Information (SI) is control information including the configuration of a broadcast program and the like. The MMT-SI is upper layer control information transmitted in the transport layer, which is an upper layer. Data such as time information and content can be stored and transmitted in the IP/UDP packet. The time information is information regarding time designated in the NTP format. Note that the MMT scheme is defined, for example, in Document A below.

### Document A: ARIB STD-B60 Version 1.6 Association of Radio Industries and Businesses

Meanwhile, an operation of retransmitting content such as a broadcast program broadcasted by the next-generation system digital terrestrial television broadcasting by digital cable television broadcasting is assumed. In a case where the transmodulation system is adopted when the retransmission by digital cable television broadcasting is performed, it is necessary to change the modulation scheme used in digital terrestrial television broadcasting to the modulation scheme used in digital cable television broadcasting.

When such retransmission is performed, there is no path for transmitting the time information transmitted in the physical layer defined by the broadcasting system of digital terrestrial television broadcasting, and the time information cannot be appropriately transmitted. Since the broadcasting system of digital terrestrial television broadcasting and the broadcasting system of digital cable television broadcasting are standardized independently, there is no agreement of a system in which the broadcasting system of digital terrestrial television broadcasting and the broadcasting system of digital cable television broadcasting are matched with each other.

Therefore, in the transmission system in Fig. 1, in the retransmission device 20, the conversion unit 211 of the processing unit 202 converts the physical layer time information transmitted in the physical layer defined in the broadcasting system of digital terrestrial television broadcasting into NTP time information stored in a packet to be transmitted in the upper layer defined in the broadcasting system of digital cable television broadcasting, so that the time information can be appropriately processed and transmitted. As a result, the reception device 30, which receives digital cable television broadcasting, can easily receive the NTP time information obtained by converting the physical layer time information transmitted in the physical layer defined in the broadcasting system of digital terrestrial television broadcasting, and can perform processing based on the NTP time information.

Hereinafter, details of the conversion processing performed by the conversion unit 211 of the processing unit 202 in the retransmission device 20 will be described. Here, two schemes of a first scheme and a second scheme will be exemplified as the conversion processing.

### (First Scheme)

In the first scheme, the physical layer time information from the transmission device 10 is converted into NTP time information by the retransmission device 20, and a TLV packet including an IP/UDP packet storing the NTP time information is transmitted to the reception device 30.

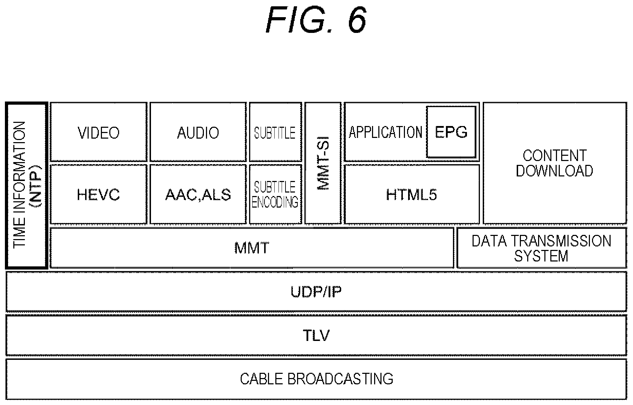

Fig. 6 is a diagram illustrating an example of a protocol stack at the time of retransmission by digital cable television broadcasting.

The protocol stack in Fig. 6 is different from the protocol stack in Fig. 5 in the following points. That is, in the protocol stack in Fig. 6, broadcasting corresponding to the physical layer represents digital cable television broadcasting (el) instead of digital terrestrial television broadcasting (terrestrial broadcasting). In a case where the transmodulation system is adopted when retransmission by digital cable television broadcasting is performed, there is no appropriate path for transmitting the physical layer time information, and thus the physical layer control information including the physical layer time information is not illustrated.

In the protocol stack in Fig. 6, as indicated by the area surrounded by a thick line, time information is transmitted in the transport layer, which is an upper layer. The packets transmitted in the transport layer include an IP/UDP packet and a TLV packet. In the first scheme, after the physical layer time information is converted into NTP time information, the NTP time information can be stored in the IP/UDP packet. Furthermore, the IP/UDP packet storing the NTP time information can be stored in the TLV packet.

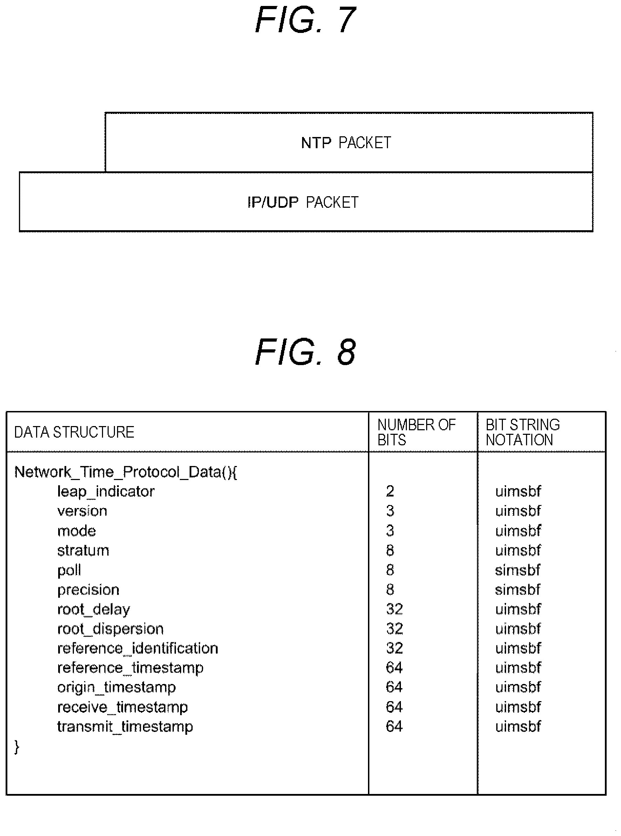

As described above, in the first scheme, the physical layer time information can be converted into the IP/UDP packet storing the NTP time information. Furthermore, in the first scheme, the physical layer time information can be converted into the TLV packet including the IP/UDP packet storing the NTP time information. Fig. 7 illustrates an example of arrangement of NTP time information. In Fig. 7, an NTP packet including the NTP time information is stored in the payload of the IP/UDP packet.

Fig. 8 is a diagram illustrating an example of syntax of NTP time information.

2-bit leap_indicator indicates that leap second is inserted or deleted in the last minute of the current month. 3-bit version indicates the version of NTP. 3-bit mode indicates an operation mode of NTP.

8-bit stratum indicates the stratum and is encoded according to the stratum. 8-bit poll indicates a polling interval according to the maximum interval of successive NTP messages. 8-bit precision indicates the precision of the system clock.

32 bit root_delay indicates a round-trip delay up to the reference time in the short NTP format. 32 bit root_dispersion indicates the dispersion of the total delay up to the reference time in the NTP short format. 32 bit reference_identification indicates an identifier indicating the reference time.

64 bit reference_timestamp indicates the time when the system time is last corrected in the NTP long format. 64 bit origin_timestamp indicates the time at the client when the request from the client to the server is transmitted in the NTP long format.

64 bit receive_timestamp indicates the time at the server when the request from the client is received in the NTP long format. 64 bit transmit_timestamp indicates the time at the server when the response to the client is transmitted in the NTP long format.

In the retransmission device 20, the conversion unit 211 of the processing unit 202 converts the physical layer time information from the transmission device 10 into the NTP time information having the structure of the NTP format illustrated in Fig. 8.

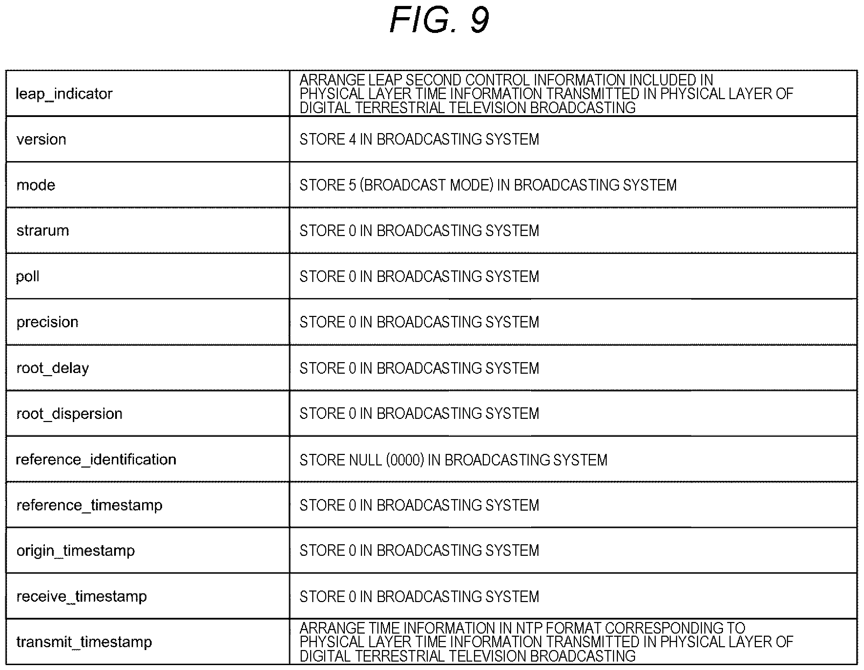

Fig. 9 is a diagram illustrating an example of conversion from physical layer time information to NTP time information. Fig. 9 illustrates how the physical layer time information is converted corresponding to the NTP format illustrated in Fig. 8.

In the leap_indicator, leap second control information regarding leap second control included in the physical layer time information transmitted in the physical layer defined by a broadcasting system of digital terrestrial television broadcasting is arranged.

In a broadcasting system such as digital cable television broadcasting, a fixed value of '4' is stored in the version. In the broadcasting system, a fixed value of '5' is stored in the mode. An operation mode of '5' means broadcast.

In the broadcasting system, a fixed value of '0' is stored in the stratum. In the broadcasting system, a fixed value of '0' is stored in the poll. In the broadcasting system, a fixed value of '0' is stored in the precision.

In the broadcasting system, a fixed value of '0' is stored in the root_delay. In the broadcasting system, a fixed value of '0' is stored in the root_dispersion. NULL (0000) is stored in the reference _identification.

In the broadcasting system, a fixed value of '0' is stored in the reference_timestamp. In the broadcasting system, a fixed value of '0' is stored in the origin_timestamp. In the broadcasting system, a fixed value of '0' is stored in the receive_timestamp.

Time information in the NTP format corresponding to the physical layer time information transmitted in the physical layer defined by the broadcasting system of digital terrestrial television broadcasting is arranged in the transmit_timestamp. The format of the physical layer time information is not particularly limited, but since there is a limit to the amount of information that can be transmitted in the physical layer, a predetermined format corresponding to the amount of information that can be transmitted can be used.

In this manner, the physical layer time information can be converted into the NTP time information by inserting a predetermined fixed value in addition to the specific information including the leap_indicator and the transmit_timestamp. Even if information other than the specific information is a fixed value, the information necessary as the time information used in the processing in the reception device 30 is included, so that the reception device 30 can operate normally.

Here, since the physical layer time information is transmitted in the physical layer and thus there is a limit to the amount of information that can be transmitted, it is assumed that a large amount of information cannot be transmitted. However, by transmitting the minimum necessary information as the physical layer time information, the conversion unit 211 can convert the physical layer time information into the NTP time information.

For example, even in a case where the time information in the NTP format cannot be transmitted in the physical layer, the conversion unit 211 converts the minimum necessary information transmitted as the physical layer time information into the NTP time information, so that the time information in the NTP format can be transmitted in the upper layer. In this example, in the physical layer time information, as minimum necessary information (specific information), information of 66 bits in total including leap second control information corresponding to the 2-bit leap_indicator and time information of a predetermined format corresponding to the 64 bit transmit_timestamp is transmitted.

Note that, in the example of the syntax in Fig. 8, the transmit_timestamp is defined by 64 bits, but in a case where such precision is too sufficient for the clock, some of 64 bits may be used. That is, 64 bits may not be used as the number of significant digits of the time information, and the bit depth of the transmit_timestamp may be reduced and defined as less than 64 bits such as 48 bits.

As described above, in the retransmission device 20, the physical layer time information transmitted from the transmission device 10 in the physical layer can be converted into the TLV packet including the IP/UDP packet storing the NTP time information and transmitted in the upper layer. As a result, the reception device 30 can receive the NTP time information transmitted in the upper layer from the retransmission device 20 and appropriately process the NTP time information.

### (Second Scheme)

In the first scheme described above, when the operation of retransmitting the broadcast program broadcasted by the next-generation system digital terrestrial television broadcasting by digital cable television broadcasting is performed, the configuration in which the TLV packet is used as the transmission packet is described. On the other hand, in the second scheme, when the operation of retransmission is performed, a configuration in which an ATSC link-layer protocol (ALP) packet is used as a packet for transmission will be described in a case where the operation corresponding to a broadcasting system that is Advanced Television Systems Committee (ATSC) 3.0 is performed.

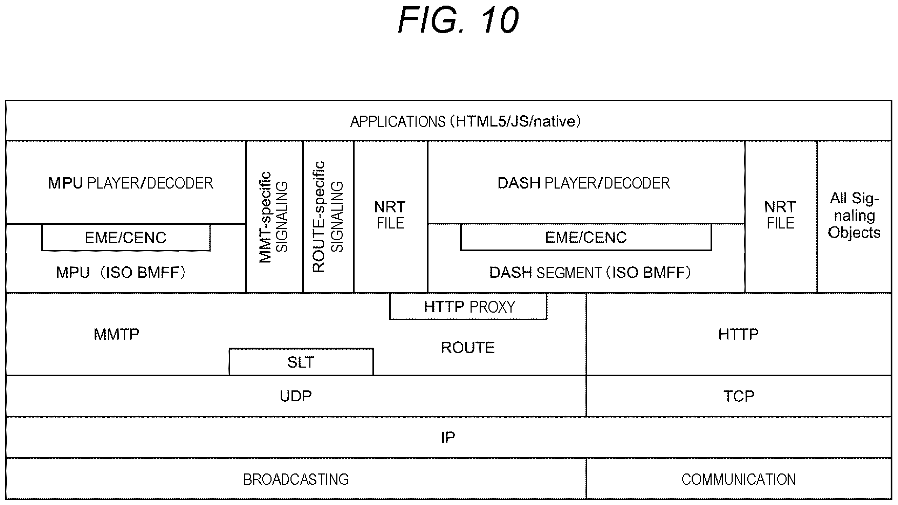

Fig. 10 is a diagram illustrating an example of a protocol stack in ATSC 3.0. In the protocol stack in Fig. 10, broadcasting and communication correspond to the physical layer, and correspond to both transmission paths of broadcasting and communication. Furthermore, in the protocol stack in Fig. 10, in a case where the physical layer is broadcasting, the media transport scheme corresponds to both a real time object delivery over unidirectional transport (ROUTE) scheme and the MMT scheme.

In the ROUTE scheme, data such as video, audio, and subtitles is processed as a DASH segment defined by dynamic adaptive streaming over HTTP (MPEG-DASH) and stored in an IP/UDP packet, which is an IP packet including a UDP packet. Then, the IP/UDP packet is stored and encapsulated in an ALP packet as the transmission packet, and the resulting broadcast stream is transmitted as a broadcast signal.

In the protocol stack in Fig. 10, the packets transmitted in the transport layer, which is the upper layer, include an IP/UDP packet and an ALP packet. In the second scheme, after physical layer time information is converted into NTP time information, the NTP time information can be stored in the IP/UDP packet. Furthermore, the IP/UDP packet storing the NTP time information can be stored in the ALP packet.

As described above, in the second scheme, the physical layer time information can be converted into the IP/UDP packet storing the NTP time information. Furthermore, in the second scheme, the physical layer time information can be converted into the ALP packet including the IP/UDP packet storing the NTP time information. The ALP packet is defined, for example, in Document B below.

Document B: ATSC Standard: "Signaling, Delivery, Synchronization, and Error Protection (A/331)", Doc. A/331: 2019 20 June 2019

Note that when the retransmission operation is performed, a generic stream encapsulation (GSE) packet can be used as the transmission packet in a case where the operation corresponding to a broadcasting system that is digital video broadcasting-terrestrial 2 (DVB-T2) is performed. In this operation, after the physical layer time information is converted into the NTP time information, the IP/UDP packet storing the NTP time information can be stored in the GSE packet. The GSE packet is defined, for example, in Document C below.

Document C: ETSI TS 102 606 -1 "Digital Video Broadcasting (DVB); Generic Stream Encapsulation (GSE) Protocol"

### (Flow of series of Processing)

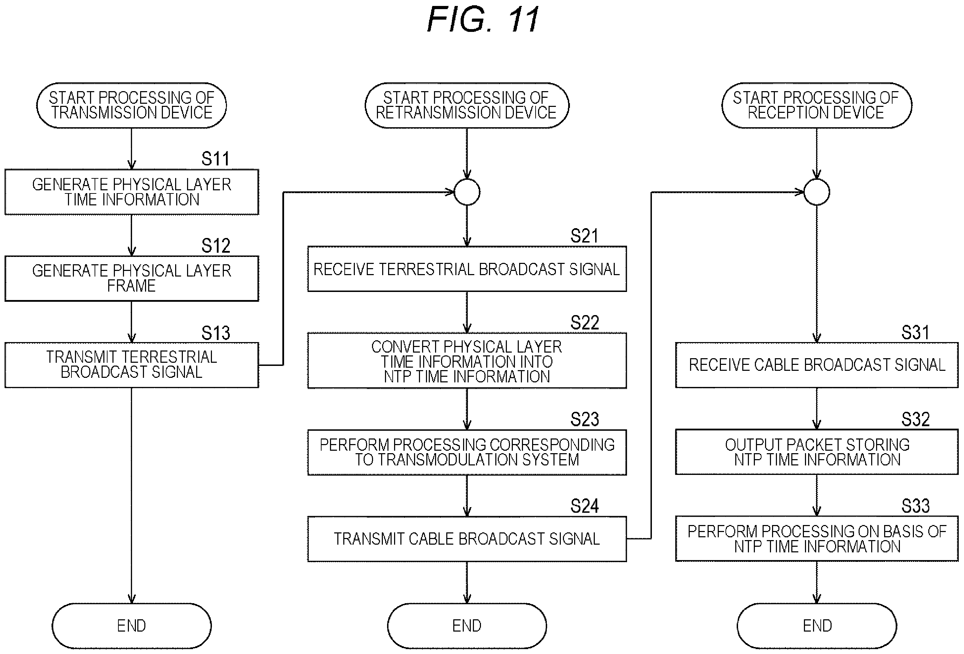

Next, a flow of processing of each device in the transmission system in Fig. 1 will be described with reference to a flowchart of Fig. 11. Here, an operation of retransmitting a broadcast program broadcasted by digital terrestrial television broadcasting by digital cable television broadcasting will be described as an example.

First, processing of steps S11 to S13 performed by the transmission device 10 will be described. In step S11, the generation unit 101 generates physical layer time information.

In step S12, the transmission unit 102 generates a physical layer frame conforming to a broadcasting system of digital terrestrial television broadcasting. This physical layer frame includes the physical layer time information. In step S13, the transmission unit 102 transmits the physical layer frame as a terrestrial broadcast signal from the transmission antenna installed in the transmission station.

Next, processing of steps S21 to S24 performed by the retransmission device 20 will be described. In step S21, the reception unit 201 receives the terrestrial broadcast signal transmitted from the transmission device 10 via the antenna.

In step S22, the conversion unit 211 converts the physical layer time information transmitted in the physical layer defined by the broadcasting system of digital terrestrial television broadcasting into NTP time information to be transmitted in the upper layer defined by the broadcasting system of digital cable television broadcasting, for example, using the first scheme described above. The NTP time information is stored in an IP/UDP packet. The IP/UDP packet storing the NTP time information is stored in a TLV packet.

In step S23, the processing unit 202 performs processing corresponding to the transmodulation system. In step S24, the transmission unit 203 transmits a cable broadcast signal to the cable television transmission network. This cable broadcast signal includes the NTP time information to be transmitted in the upper layer.

Next, processing of steps S31 to S33 performed by the reception device 30 will be described. In step S31, the reception unit 301 receives the cable broadcast signal via the cable television transmission network.

In step S32, the reception unit 301 performs necessary processing such as demodulation processing on the received cable broadcast signal, and outputs the resulting TLV packet storing the NTP time information.

In step S33, the processing unit 302 performs predetermined processing on the basis of the NTP time information output from the reception unit 301. This NTP time information is time information in the NTP format obtained by converting the physical layer time information transmitted in the physical layer defined by the broadcasting system of digital terrestrial television broadcasting. Furthermore, in the processing unit 302, the broadcast stream is processed, and the data of the broadcast component is decoded and reproduced on the basis of the upper layer control information.

As described above, the retransmission device 20 converts the physical layer time information transmitted in the physical layer defined in the broadcasting system of digital terrestrial television broadcasting into NTP time information to be transmitted in the upper layer defined in the broadcasting system of digital cable television broadcasting, so that the reception device 30 can appropriately process the time information.

### <2. Second Embodiment>

### (Configuration of Transmission System)

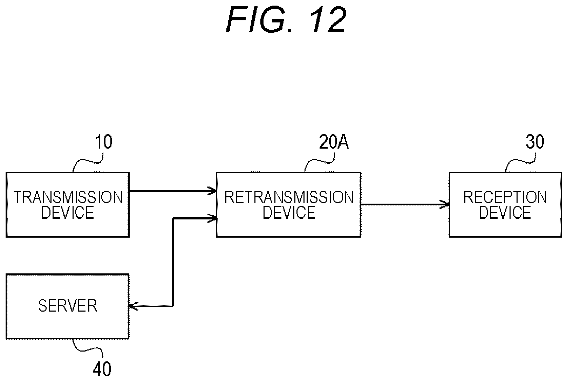

Fig. 12 is a block diagram illustrating another configuration example of the embodiment of the transmission system to which the present disclosure is applied.

In Fig. 12, the transmission system includes a transmission device 10, a retransmission device 20A, a reception device 30, and a server 40.

The transmission device 10 generates a broadcast stream, performs necessary processing on the stream, and transmits the resulting terrestrial broadcast signal from a transmission antenna installed in a transmission station.

The server 40 is a distribution server that distributes content or the like in response to a request from a device connected to a network such as the Internet. The server 40 generates a communication stream, performs necessary processing, and transmits the resulting communication signal to the retransmission device 20A via a network such as the Internet.

The communication stream includes a communication component constituting content such as a program, control information regarding the communication component, time information, and the like. The communication component includes components such as a video stream, an audio stream, and a subtitle stream.

The retransmission device 20A performs necessary processing on the terrestrial broadcast signal received via the antenna, and transmits the resulting cable broadcast signal (RF signal) to the cable television transmission network. Furthermore, the retransmission device 20A receives the communication signal transmitted from the server 40 via a network such as the Internet. The retransmission device 20A performs necessary processing on the communication signal received from the server 40, and transmits the resulting cable broadcast signal (IP signal) to the cable television transmission network.

The reception device 30 is a fixed receiver such as a television receiver. The reception device 30 receives the cable broadcast signal (RF signal, IP signal) transmitted from the retransmission device 20A via the cable television transmission network. The reception device 30 outputs video and audio of content such as a broadcast program by processing at least one of a broadcast stream or a communication stream obtained from the cable broadcast signal (RF signal, IP signal). As a result, the user can view content such as a broadcast program.

### (Configuration of Retransmission Device)

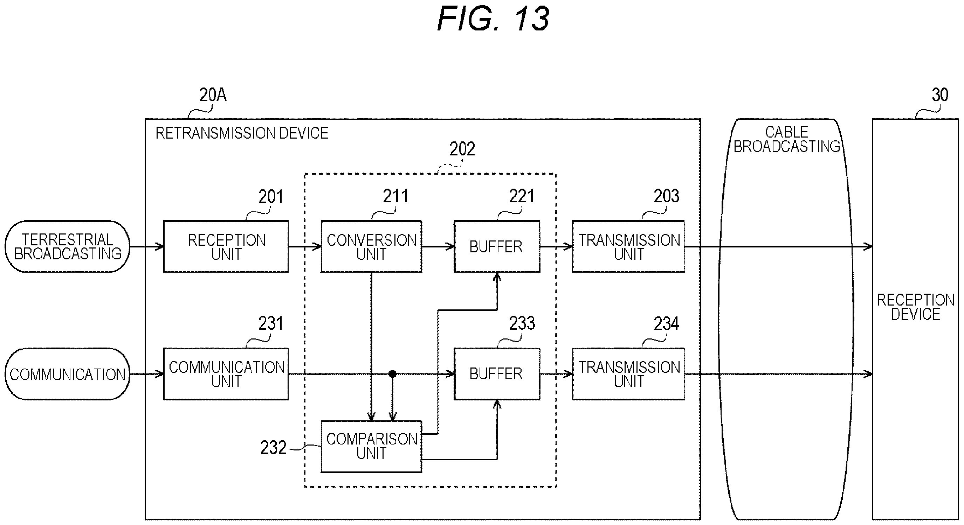

Fig. 13 is a block diagram illustrating a configuration example of the retransmission device 20A in Fig. 12.

In Fig. 13, the retransmission device 20A includes a reception unit 201, a transmission unit 203, a conversion unit 211, a buffer 221, a communication unit 231, a comparison unit 232, a buffer 233, and a transmission unit 234. The conversion unit 211, the buffer 221, the comparison unit 232, and the buffer 233 are included in the processing unit 202.

In the retransmission device 20A in Fig. 13, portions corresponding to those of the retransmission device 20 in Fig. 3 are denoted by the same reference numerals, and the description thereof will be appropriately omitted.

The reception unit 201 receives the terrestrial broadcast signal transmitted from the transmission device 10 via the antenna. The processing unit 202 performs necessary processing on the signal output from the reception unit 201, and stores data of the resulting broadcast component in the buffer 221. The conversion unit 211 converts the physical layer time information transmitted in the physical layer defined by the broadcasting system of digital terrestrial television broadcasting into NTP time information to be supplied to the comparison unit 232.

The communication unit 231 receives a communication signal transmitted from the server 40 via a network such as the Internet and performs necessary processing. The processing unit 202 performs necessary processing on the signal output from the communication unit 231, and stores data of the resulting communication component in the buffer 233. Furthermore, the processing unit 202 acquires time information in the NTP format included in the communication stream to be supplied to the comparison unit 232.

The NTP time information from the conversion unit 211 and the time information in the NTP format acquired via communication are supplied to the comparison unit 232. The comparison unit 232 compares the NTP time information with the time information in the NTP format acquired via communication. The processing unit 202 adjusts a delay occurring between the data of the broadcast component stored in the buffer 221 and the data of the communication component stored in the buffer 233 on the basis of the comparison result by the comparison unit 232.

The data of the broadcast component stored in the buffer 221 and the data of the communication component stored in the buffer 233 are output to the transmission unit 203 and the transmission unit 234, respectively, at appropriate timings by the delay adjustment control by the processing unit 202. The transmission unit 203 performs necessary processing on the data of the broadcast component output from the buffer 221, and transmits the resulting cable broadcast signal (RF signal) to the cable television transmission network. The transmission unit 234 performs necessary processing on the data of the communication component output from the buffer 233, and transmits the resulting cable broadcast signal (IP signal) to the cable television transmission network.

The reception device 30 receives a cable broadcast signal (RF signal, IP signal) transmitted from the retransmission device 20A via the cable television transmission network and performs necessary processing, thereby outputting video and audio of content such as a broadcast program. For example, a case where a service is provided by combining a broadcast component transmitted via broadcasting and a communication component transmitted via communication is assumed. Even in a case where such a service is provided, it is possible to synchronize components transmitted via different paths by adjusting a delay.

As described above, the retransmission device 20A compares the NTP time information obtained by converting the physical layer time information transmitted in the physical layer defined in the broadcasting system of digital terrestrial television broadcasting with the time information in the NTP format acquired via communication, and can adjust the delay between the broadcast signal (RF signal) acquired via broadcasting and the communication signal (IP signal) acquired via communication on the basis of the comparison result. As described above, the reception device 30 side can output a synchronized signal without adjusting the signal delay by adjusting the signal delay on the retransmission device 20A side.

### <3. Third Embodiment>

### (Configuration of Transmission System)

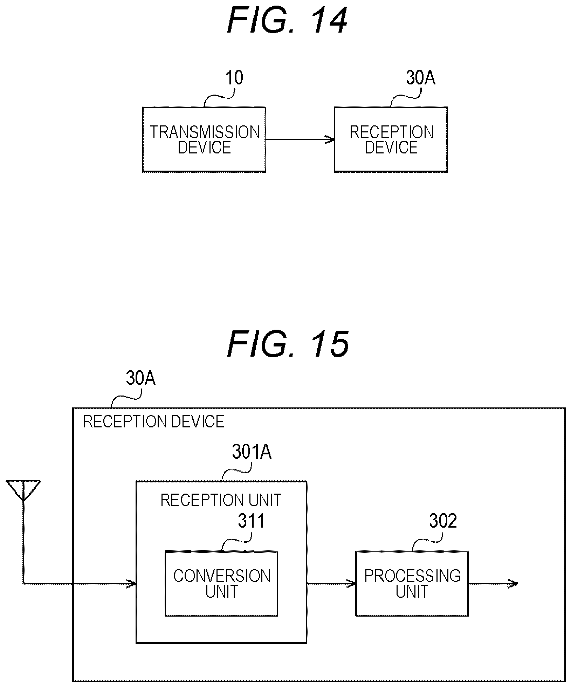

Fig. 14 is a block diagram illustrating still another configuration example of the embodiment of the transmission system to which the present disclosure is applied.

In Fig. 14, the transmission system includes a transmission device 10 and a reception device 30A.

The transmission device 10 generates a broadcast stream, performs necessary processing on the stream, and transmits the resulting terrestrial broadcast signal from a transmission antenna installed in a transmission station.

The reception device 30A is a fixed receiver such as a television receiver. The reception device 30A receives the terrestrial broadcast signal transmitted from the transmission device 10 via the antenna. The reception device 30A outputs video and audio of content such as a broadcast program by processing a broadcast stream obtained from the terrestrial broadcast signal. As a result, the user can view content such as a broadcast program.

### (Configuration of Reception Device)

Fig. 15 is a block diagram illustrating a configuration example of the reception device 30A in Fig. 14.

In Fig. 15, the reception device 30A includes a reception unit 301A and a processing unit 302. The reception unit 301A includes a conversion unit 311.

The reception unit 301A includes a tuner, a demodulation LSI, and the like. The reception unit 301A performs necessary processing such as demodulation processing on the terrestrial broadcast signal received from the transmission device 10 via the antenna, and supplies a packet storing data of the resulting broadcast stream to the processing unit 302.

The conversion unit 311 is included in a demodulation device such as the demodulation LSI. The conversion unit 311 converts the physical layer time information transmitted in the physical layer defined by the broadcasting system of digital terrestrial television broadcasting into NTP time information to be transmitted in the upper layer such as the transport layer. This NTP time information is stored in an IP/UDP packet. The IP/UDP packet storing the NTP time information is stored in a TLV packet. A TLV packet storing the NTP time

information is output to the processing unit 302.

The processing unit 302 includes a main SoC and the like. The processing unit 302 performs necessary processing such as decoding processing and reproduction processing on the packet supplied from the reception unit 301A. Data such as video and audio obtained by processing such as the decoding processing and the reproduction processing is output to a subsequent circuit. As a result, in the reception device 30A, the video of content such as a broadcast program is displayed on a display, and the audio synchronized with the video is output from a speaker.

Furthermore, the processing unit 302 performs predetermined processing on the basis of the NTP time information stored in the TLV packet supplied from the reception unit 301A. This NTP time information is time information in the NTP format obtained by converting the physical layer time information transmitted in the physical layer defined by the broadcasting system of digital terrestrial television broadcasting.

In the transmission system in Fig. 14 configured as described above, in the reception device 30A, the conversion unit 311 of the reception unit 301A converts the physical layer time information transmitted in the physical layer defined in the broadcasting system of digital terrestrial television broadcasting transmitted from the transmission device 10 into NTP time information to be transmitted in the upper layer such as the transport layer, and outputs the packet including the NTP time information to the processing unit 302 in the subsequent stage.

With such a configuration, the reception device 30A can multiplex and output the NTP time information obtained by converting the physical layer time information transmitted in the physical layer defined by the broadcasting system of digital terrestrial television broadcasting with the data without increasing the number of output signals of the demodulation device including the conversion unit 311. As a result, the processing unit 302 including the main SoC can process the NTP time information output from the reception unit 301A including the demodulation device at an appropriate timing.

### (Flow of series of Processing)

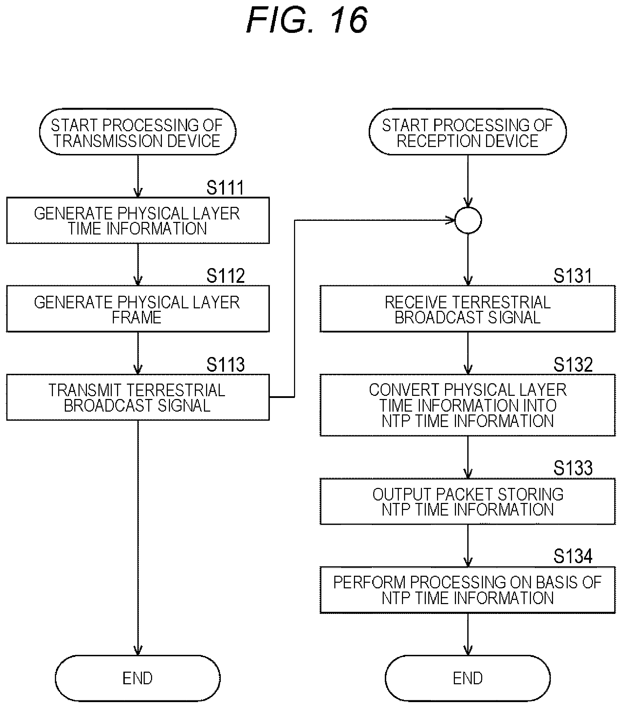

Next, a flow of processing of each device in the transmission system in Fig. 14 will be described with reference to a flowchart of Fig. 16.

First, processing of steps S111 to S113 performed by the transmission device 10 will be described. In steps S111 to S113, as in steps S11 to S13 in Fig. 11, a physical layer frame including physical layer time information is transmitted as a terrestrial broadcast signal from the transmission antenna installed in the transmission station.

Next, processing of steps S131 to S134 performed by the reception device 30A will be described. In step S131, the reception unit 301A receives the terrestrial broadcast signal transmitted from the transmission device 10 via the antenna.

In step S132, the conversion unit 311 converts the physical layer time information transmitted in the physical layer defined by the broadcasting system of digital terrestrial television broadcasting into NTP time information to be transmitted in the upper layer such as the transport layer, for example, using the first scheme or the second scheme described above. In step S133, the reception unit 301A outputs the TLV packet storing the NTP time information.

In step S134, the processing unit 302 performs predetermined processing on the basis of the NTP time information output from the reception unit 301. This NTP time information is time information in the NTP format obtained by converting the physical layer time information transmitted in the physical layer defined by the broadcasting system of digital terrestrial television broadcasting. Furthermore, in the processing unit 302, the broadcast stream is processed, and the data of the broadcast component is decoded and reproduced on the basis of the upper layer control information.

As described above, in the reception device 30A, the conversion unit 311 converts the physical layer time information transmitted in the physical layer defined in the broadcasting system of digital terrestrial television broadcasting into NTP time information to be transmitted in the upper layer such as the transport layer, so that the processing unit 302 can appropriately process the time information.

### <4. Modifications>

### (Other Broadcasting Systems)

In the above description, the operation of retransmitting the content such as the broadcast program broadcasted by the next-generation system digital terrestrial television broadcasting by digital cable television broadcasting is mainly described, but the present invention may be applied to a combination of other broadcasting systems. For example, a broadcasting system such as satellite digital broadcasting using a broadcasting satellite (BS), a communications satellite (CS), or the like can be applied. Furthermore, the broadcasting system of digital broadcasting is not limited to ISDB, and a broadcasting system defined by DVB, ATSC, or the like may be used in combination.

### (Other Examples of Reception Device)

In the above description, a device capable of receiving a broadcast signal, such as a television receiver or a set top box, is exemplified as the reception device 30 or the reception device 30A. However, for example, the reception device may have a communication function of performing communication via a communication line (communication network) such as the Internet or a telephone network. In this case, the reception device 30 performs bidirectional communication with a server via a communication line such as the Internet.

Furthermore, in the above description, the reception device 30 or the reception device 30A is described as a fixed receiver such as a television receiver or a set top box, but the reception device 30 or the reception device 30A may be a mobile receiver such as a smartphone, a mobile phone, or a tablet computer, an in-vehicle receiver mounted on a vehicle such as an in-vehicle television, or the like. Note that, in the present specification, the system refers to a logical assembly of a plurality of devices.

### (Names of Descriptors and the like)

Another name may be used as the names of the descriptors, fields, packets, streams, and the like described above. For example, the TLV packet may be referred to as an ALP packet, a GSE packet, or the like. The difference between these names is a formal difference, and substantial content of a target descriptor and the like is not different.

### (Configuration of Computer)

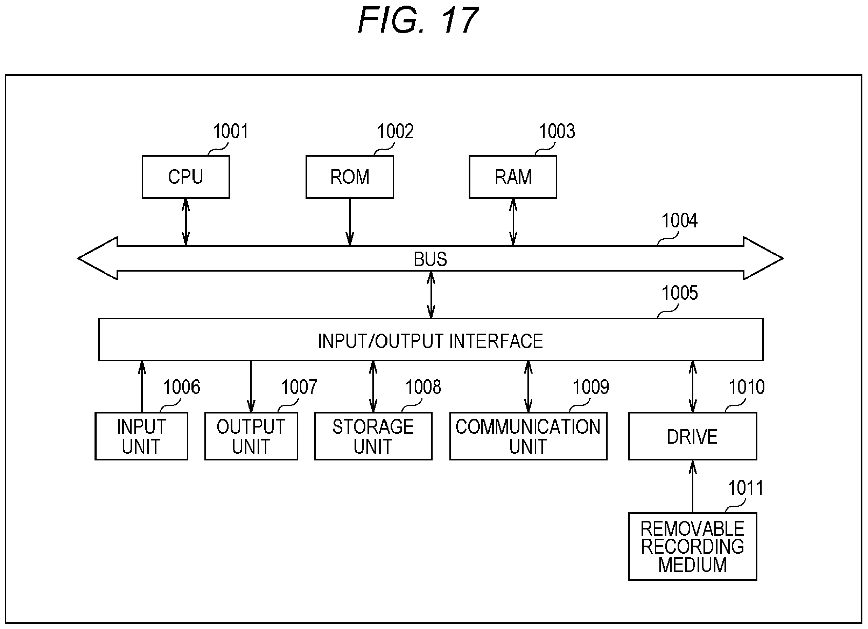

A series of the processing described above can be executed by hardware, or may be executed by software. In a case where the series of processing is executed by software, a program constituting the software is installed on a computer. Fig. 17 is a block diagram illustrating a configuration example of hardware of a computer that executes the series of processing described above by a program.

In the computer, a central processing unit (CPU) 1001, a read only memory (ROM) 1002, and a random access memory (RAM) 1003 are mutually connected by a bus 1004. An input/output interface 1005 is further connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone and the like. The output unit 1007 includes a display, a speaker, and the like. The storage unit 1008 includes a hard disk, a nonvolatile memory, and the like. The communication unit 1009 includes a network interface and the like. The drive 1010 drives a removable recording medium 1011 such as a semiconductor memory, a magnetic disk, an optical disk, or a magneto-optical disk.

In the computer configured as above, the series of processing described above is executed by the CPU 1001 loading a program recorded in the ROM 1002 or the storage unit 1008 to the RAM 1003 via the input/output interface 1005 and the bus 1004 and executing the program.

A program executed by the computer (CPU 1001) can be provided by being recorded on the removable recording medium 1011 as a package medium, or the like, for example. Furthermore, the program can be provided via a wired or wireless transmission medium such as a local area network, the Internet, or digital broadcasting.

In the computer, the program can be installed on the storage unit 1008 via the input/output interface 1005 by attaching the removable recording medium 1011 to the drive 1010. Furthermore, the program can be received by the communication unit 1009 via a wired or wireless transmission medium and installed in the storage unit 1008. In addition, the program can be installed in the ROM 1002 or the storage unit 1008 in advance.

Here, in the present specification, the processing to be executed by the computer in accordance with the program is not necessarily executed in time series according to orders described in the flowcharts. That is, the processing executed by the computer in accordance with the program also includes processing that is executed in parallel or individually (for example, parallel processing or object processing). Furthermore, the program may be executed by one computer (processor), or may be executed by a plurality of computers in a distributed manner.

Note that embodiments of the present disclosure are not limited to the embodiments described above, and various modifications may be made without departing from the scope of the present disclosure. Furthermore, the effects described in the present specification are merely examples and are not limited, and other effects may be provided.

Furthermore, the present disclosure can have the following configurations.

(1) A retransmission device including:
   a reception unit that receives a broadcast signal of a first broadcasting system;
   a conversion unit that converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and
   a transmission unit that transmits a broadcast signal of the second broadcasting system.
(2) The retransmission device according to (1), in which
   the upper layer is a transport layer, and
   the packet is an IP/UDP packet.
(3) The retransmission device according to (2), in which
   the first time information includes specific information regarding time, and
   the conversion unit converts the first time information into the second time information including the specific information and a predetermined fixed value.
(4) The retransmission device according to (3), in which
   the specific information includes at least control information regarding control of leap second and time information in a predetermined format.
(5) The retransmission device according to any one of (2) to (4), in which
   the first broadcasting system is a broadcasting system of digital terrestrial television broadcasting, and
   the second broadcasting system is a broadcasting system of digital cable television broadcasting.
(6) The retransmission device according to (5), in which
   the conversion unit converts the first time information into a TLV packet including an IP/UDP packet storing the second time information.
(7) The retransmission device according to any one of (2) to (4), in which
   the second broadcasting system is a broadcasting system conforming to ATSC 3.0, and
   the conversion unit converts the first time information into an ALP packet including an IP/UDP packet storing the second time information.
(8) The retransmission device according to any one of (1) to (7), further including:
   a communication unit that communicates with a server via a network; and
   a comparison unit that compares the second time information with time information in an NTP format acquired via communication, in which
   the retransmission device adjusts a delay between the broadcast signal of the second broadcasting system and a communication signal acquired via communication on the basis of a comparison result by the comparison unit.
(9) A retransmission method, including:
   by a retransmission device,
   receiving a broadcast signal of a first broadcasting system;
   converting first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and
   transmitting a broadcast signal of the second broadcasting system.
(10) A reception device including:
   a reception unit that receives and demodulates a broadcast signal of a first broadcasting system; and
   a processing unit that processes a packet obtained by demodulating the broadcast signal, in which
   the reception unit includes a conversion unit that converts first time information transmitted in a physical layer defined by the first broadcasting system into second time information in an NTP format stored in a packet transmitted in an upper layer, the upper layer being a layer higher than a physical layer defined by a second broadcasting system different from the first broadcasting system, and
   the processing unit processes a packet storing the second time information output from the reception unit.
(11) The reception device according to (10), in which
   the upper layer is a transport layer, and
   the packet is an IP/UDP packet.
(12) The reception device according to (11), in which
   the first time information includes specific information regarding, and
   the conversion unit converts the first time information into the second time information including the specific information and a predetermined fixed value.
(13) The reception device according to (12), in which
   the specific information includes at least control information regarding control of leap second and time information in a predetermined format.
(14) The reception device according to any one of (11) to (13), in which
   the first broadcasting system is a broadcasting system of digital terrestrial television broadcasting, and
   the second broadcasting system is a broadcasting system of digital cable television broadcasting.
(15) The reception device according to (14), in which
   the conversion unit converts the first time information into a TLV packet including an IP/UDP packet storing the second time information.
(16) The reception device according to any one of (11) to (13), in which
   the second broadcasting system is a broadcasting system conforming to ATSC 3.0, and
   the conversion unit converts the first time information into an ALP packet including an IP/UDP packet storing the second time information.
(17) The reception device according to any one of (10) to (16), in which
   the conversion unit is included in a demodulation device.
(18) A reception method of a reception device, the reception device including:
   a reception unit that receives and demodulates a broadcast signal of a first broadcasting system; and
   a processing unit that processes a packet obtained by demodulating the broadcast signal, in which
   the reception unit converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system, and
   the processing unit processes a packet storing the second time information output from the reception unit.

### REFERENCE SIGNS LIST

- 10: Transmission device
- 20: Retransmission device
- 20A: Retransmission device
- 30: Reception device
- 30A: Reception device
- 40: Server
- 101: Generation unit
- 102: Transmission unit
- 201: Reception unit
- 202: Processing unit
- 203: Transmission unit
- 211: Conversion unit
- 221: Buffer
- 231: Communication unit
- 232: Comparison unit
- 233: Buffer
- 234: Transmission unit
- 301: Reception unit
- 301A: Reception unit
- 302: Processing unit
- 311: Conversion unit
- 1001: CPU

## Claims

1. A retransmission device comprising:
a reception unit that receives a broadcast signal of a first broadcasting system;
a conversion unit that converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and
a transmission unit that transmits a broadcast signal of the second broadcasting system.

2. The retransmission device according to claim 1, wherein
the upper layer is a transport layer, and
the packet is an IP/UDP packet.

3. The retransmission device according to claim 2, wherein
the first time information includes specific information regarding time, and
the conversion unit converts the first time information into the second time information including the specific information and a predetermined fixed value.

4. The retransmission device according to claim 3, wherein
the specific information includes at least control information regarding control of leap second and time information in a predetermined format.

5. The retransmission device according to claim 2, wherein
the first broadcasting system is a broadcasting system of digital terrestrial television broadcasting, and
the second broadcasting system is a broadcasting system of digital cable television broadcasting.

6. The retransmission device according to claim 5, wherein
the conversion unit converts the first time information into a TLV packet including an IP/UDP packet storing the second time information.

7. The retransmission device according to claim 2, wherein
the second broadcasting system is a broadcasting system conforming to ATSC 3.0, and
the conversion unit converts the first time information into an ALP packet including an IP/UDP packet storing the second time information.

8. The retransmission device according to claim 1, further comprising:
a communication unit that communicates with a server via a network; and
a comparison unit that compares the second time information with time information in an NTP format acquired via communication, wherein
the retransmission device adjusts a delay between the broadcast signal of the second broadcasting system and a communication signal acquired via communication on a basis of a comparison result by the comparison unit.

9. A retransmission method, comprising:
by a retransmission device,
receiving a broadcast signal of a first broadcasting system;
converting first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system; and
transmitting a broadcast signal of the second broadcasting system.

10. A reception device comprising:
a reception unit that receives and demodulates a broadcast signal of a first broadcasting system; and
a processing unit that processes a packet obtained by demodulating the broadcast signal, wherein
the reception unit includes a conversion unit that converts first time information transmitted in a physical layer defined by the first broadcasting system into second time information in an NTP format stored in a packet transmitted in an upper layer, the upper layer being a layer higher than a physical layer defined by a second broadcasting system different from the first broadcasting system, and
the processing unit processes a packet storing the second time information output from the reception unit.

11. The reception device according to claim 10, wherein the upper layer is a transport layer, and
the packet is an IP/UDP packet.

12. The reception device according to claim 11, wherein
the first time information includes specific information regarding time, and
the conversion unit converts the first time information into the second time information including the specific information and a predetermined fixed value.

13. The reception device according to claim 12, wherein
the specific information includes at least control information regarding control of leap second and time information in a predetermined format.

14. The reception device according to claim 11, wherein
the first broadcasting system is a broadcasting system of digital terrestrial television broadcasting, and
the second broadcasting system is a broadcasting system of digital cable television broadcasting.

15. The reception device according to claim 14, wherein
the conversion unit converts the first time information into a TLV packet including an IP/UDP packet storing the second time information.

16. The reception device according to claim 11, wherein
the second broadcasting system is a broadcasting system conforming to ATSC 3.0, and
the conversion unit converts the first time information into an ALP packet including an IP/UDP packet storing the second time information.

17. The reception device according to claim 10, wherein
the conversion unit is included in a demodulation device.

18. A reception method of a reception device, the reception device comprising:
a reception unit that receives and demodulates a broadcast signal of a first broadcasting system; and
a processing unit that processes a packet obtained by demodulating the broadcast signal, wherein
the reception unit converts first time information transmitted in a physical layer defined by the first broadcasting system into second time information in an NTP format stored in a packet to be transmitted in an upper layer, the upper layer being a layer higher than a physical layer defined by a second broadcasting system different from the first broadcasting system, and
the processing unit processes a packet storing the second time information output from the reception unit.
